# FASCICULE DE BREVET EUROPEEN

(11) **EP 1 042 839 B1**
(45) Date de publication et mention de la délivrance du brevet: **06.03.2002**
(21) Numéro de dépôt: 98963594.1
(22) Date de dépôt: 22.12.1998
(51) Int. Cl.: H01M 10/40

(54) **ADDITIFS POUR AMELIORER LA REVERSIBILITE D'UNE ELECTRODE DE CARBONE D'UN GENERATEUR ELECTROCHIMIQUE SECONDAIRE A IONS LITHIUM**
ADDITIVE ZUR VERBESSERUNG DER REVERSIBILITÄT EINER KOHLENSTOFFELEKTRODE IN EINEM AUFLADBAREN ELEKTROCHEMISCHEN LITHIUMIONSTROMGENERATORS
ADDITIVES FOR IMPROVING THE REVERSIBILITY OF A CARBON ELECTRODE OF A LITHIUM ION SECONDARY ELECTROCHEMICAL GENERATOR

(30) Priorité: 23.12.1997 FR 9716355
(43) Date de publication de la demande: 11.10.2000
(73) Titulaire: CENTRE NATIONAL D'ETUDES SPATIALES, 75001 Paris (FR)
(72) Inventeur: BILLAUD, Denis, F-54000 Nancy (FR); NAJI, Abdelaziz, 60300 Berkane (MA); WILLMANN, Patrick, F-31450 Montgiscard (FR)
(74) Mandataire: Des Termes, Monique
(86) Numéro de dépôt international: FR9802828
(87) Numéro de publication internationale: WO9934468

(56) Documents cités:
- US-A- 5 529 859
- PATENT ABSTRACTS OF JAPAN vol. 095, no. 010, 30 novembre 1995 & JP 07 192762 A (SONY CORP), 28 juillet 1995
- CHEMICAL ABSTRACTS, vol. 129, no. 7, 17 août 1998 Columbus, Ohio, US; abstract no. 83778, KUSUMOTO: "lithium batteries using electrolyte solutions containing halogenated solvents and nitrogen compounds" XP002101631 -& JP 10 189008 A (SANYO ELECTRIC CO) 21 juillet 1998
- CHEMICAL ABSTRACTS, vol. 128, no. 15, 13 avril 1998 Columbus, Ohio, US; abstract no. 182568, ARAI: "secondary lithium batteries and electric power sources" XP002101634 -& JP 10 055822 A (HITACHI LTD)
- PATENT ABSTRACTS OF JAPAN vol. 012, no. 077 (E-589), 10 mars 1988 & JP 62 216171 A (SANYO ELECTRIC CO LTD), 22 septembre 1987
- PATENT ABSTRACTS OF JAPAN vol. 097, no. 003, 31 mars 1997 & JP 08 298134 A (SONY CORP), 12 novembre 1996

## Description

La présente invention a pour objet l'utilisation d'additifs pour améliorer la réversibilité, en présence de carbonate de propylène, d'une électrode de carbone d'un générateur électrochimique secondaire à ions lithium.

Elle s'applique en particulier à la réalisation de générateurs secondaires de forte énergie spécifique, qui sont d'un grand intérêt pour le développement des appareils portables et à plus long terme pour la fabrication de véhicules électriques.

### Etat de la technique antérieur

Actuellement, pour ces applications, le choix semble se porter sur les générateurs électrochimiques secondaires à ions lithium utilisant comme électrode négative un composé carboné, en particulier le graphite.

En effet, le graphite est à l'heure actuelle le carbone le plus prometteur puisqu'il peut accepter dans sa structure lamellaire jusqu'à un atome de lithium pour six atomes de carbone, à des potentiels proches de celui du lithium métallique. Cependant, l'intercalation du lithium dans le graphite ne peut être obtenue de manière réversible que dans quelques électrolytes appropriés. Ainsi, il est difficile d'utiliser dans de tels générateurs du carbonate de propylène malgré ces bonnes propriétés, car il présente l'inconvénient de se décomposer dans la structure du graphite et d'empêcher ainsi l'intercalation du lithium dans l'électrode de graphite.

A. N. Dey et B. P. Sullivan font état de ce problème de décomposition du carbonate de propylène dans l'électrode de graphite, dans J. Electrochem. Soc., 117, 1970, pages 222-224, [1]. De même, M.Arakawa et J. Ichi Yamaki font état de ce problème et proposent un schéma de décomposition du carbonate de propylène dans J. Electroanal. Chem., 219, 1987, p. 273-280, [2].

Pour surmonter ces difficultés, D. Billaud, A. Naji et P. Willmann ont proposé dans J. Chem. Soc., Chem. Commun., 1995, pages 1867 et 1868, [3], de soumettre l'électrode de graphite à un prétraitement pour former sur celle-ci une couche protectrice imperméable aux molécules de carbonate de propylène mais permettant la diffusion des ions lithium. Cette couche protectrice est formée par réduction électrochimique, dans un électrolyte comprenant du carbonate d'éthylène et du perchlorate de lithium.

Une autre solution pour éviter cet inconvénient a été décrite par Z. X. Shu, R. S. McMillan, J. J. Murray et I. J. Davidson dans J. Electrochem. Soc., 143, n°7, Juillet 1996, p. 2230-2235, [4]. Dans ce cas, on utilise un électrolyte comprenant un mélange de carbonate de chloroéthylène et de carbonate de propylène.

La première solution décrite dans la référence [3] présente l'inconvénient de nécessiter une étape de prétraitement de l'électrode, avant son utilisation dans le générateur électrochimique secondaire avec un électrolyte à base de carbonate de propylène.

La deuxième solution décrite dans la référence [4] a pour inconvénient de nécessiter une proportion importante d'additif puisque le carbonate de chloroéthylène (chloro-EC) de formule : 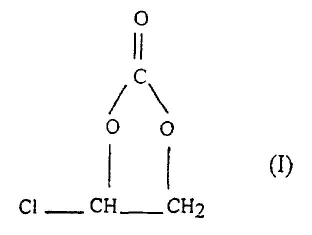 représente généralement 50 % en volume de l'électrolyte, et que cette proportion de chloro-EC ne doit pas être inférieure à 30 %.

La présente invention a précisément pour objet un procédé pour améliorer la réversibilité de l'intercalation du lithium dans une électrode de carbone d'un générateur électrochimique secondaire à ions lithium utilisant un électrolyte comprenant du carbonate de propylène, qui pallie ces inconvénients.

### Exposé de l'invention

Selon l'invention, le procédé pour améliorer la réversibilité de l'intercalation du lithium dans une électrode de carbone d'un générateur électrochimique à ions lithium, utilisant un électrolyte comprenant du carbonate de propylène, consiste à former par voie électrochimique, lors de la première utilisation du générateur, un film de passivation sur la surface de l'électrode de carbone essentiellement à partir d'un composé organique choisi parmi les esters α-halogénés cycliques.

Ces composés organiques sont particulièrement intéressants car ils permettent de former une couche passivante sur l'électrode de carbone, lors de la première utilisation du générateur électrochimique, en étant utilisés en une quantité beaucoup moins importante que celle nécessaire dans le cas du carbonate de chloroéthylène utilisé dans la référence [4].

Selon l'invention, on choisit un ester α-halogéné liquide à la température ambiante ou soluble dans le carbonate de propylène (PC) ou dans un mélange de PC et d'autres solvants, qui soit par ailleurs stable dans les conditions de fonctionnement du générateur électrochimique.

L'halogène utilisé dans l'ester peut être en particulier le chlore, le brome ou l'iode.

On utilise conformément à l'invention des esters cycliques α-halogénés répondant à la formule suivante : 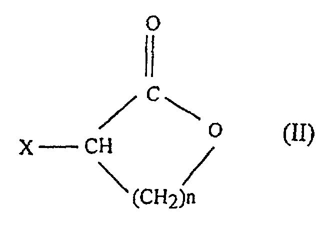 dans laquelle X représente un halogène tel que Cl, Br ou I, et n est un nombre entier allant de 1 à 3, un ou plusieurs des groupes CH₂ pouvant être substitués par des groupements méthyle, éthyle, propyle ou butyle.

A titre d'exemple d'un ester cyclique de ce type, on peut citer la α-bromo-γ-butyrolactone (BrBL) qui répond à la formule (II) donnée ci-dessus avec n = 2 et X représentant Br.

Selon un mode préféré de réalisation de l'invention, le composé organique choisi parmi les esters α-halogénés cycliques est ajouté à l'électrolyte du générateur électrochimique, de façon à permettre la formation du film de passivation sur la surface de l'électrode de carbone lors de la première utilisation du générateur.

Selon un second mode de réalisation de l'invention, le composé organique choisi parmi les esters α-halogénés cycliques, est adsorbé sur l'électrode de carbone. Dans ce cas, on soumet tout d'abord l'électrode à une étape d'adsorption du composé organique en la trempant dans ce composé, avant de l'utiliser dans le générateur électrochimique. Comme précédemment lors de la première utilisation, on forme par réduction électrochimique du composé adsorbé un film de passivation sur l'électrode de carbone.

Dans le premier mode de réalisation de l'invention, l'électrolyte comprend avantageusement une solution d'au moins d'un sel de lithium dans un solvant constitué par un mélange comprenant du carbonate de propylène et le composé organique choisi parmi les esters α-halogénés cycliques et non-cyliques.

Le(s) sel(s) de lithium utilisé(s) peuvent être choisis parmi les sels habituellement utilisés dans les générateurs électrochimiques à ions lithium. On utilise de préférence, le perchlorate de lithium LiClO₄, l'hexafluoroarséniate de lithium LiAsF₆, l'hexafluorophosphate de lithium LiPF₆, le tétrafluoroborate de lithium LiBF₄, le trifluorométhanesulfonate de lithium (triflate de lithium) CF₃SO₃Li et le trifluorosulfonylimide de lithium (LiTFSI) LiN(CF₃SO₂)₂.

Dans un électrolyte de ce type, la teneur en composé organique ajouté peut être faible. Elle est choisie de façon à former un film de passivation ayant une épaisseur suffisante sur toute la surface de l'électrode pour empêcher le contact entre les molécules de carbonate de propylène et l'électrode de carbone, mais cette proportion ne doit pas être trop importante car si le film est trop épais, celui-ci empêchera la diffusion des ions lithium dans l'électrode.

Lorsqu'on utilise la α-bromo-γ-butyrolactone comme composé organique ajouté, celle-ci peut représenter de 0,5 à 3 % en volume du solvant constitué par le mélange de carbonate de propylène et d'α-bromo-γ-butyrolactone, et de préférence 1 à 2 % en volume du solvant.

Les concentrations en sel de lithium de l'électrolyte de l'invention sont généralement telles que l'électrolyte contient au moins 0,1 mol/l d'ions lithium. A titre d'exemple, la concentration en sel(s) de lithium peut se situer dans la gamme de 0,1 mol/l jusqu'à la saturation.

Dans le générateur électrochimique à ions lithium utilisant un tel électrolyte et une électrode de carbone, l'autre électrode, soit l'électrode positive peut être réalisée en divers matériaux tels que des oxydes, des sulfures ou des oxysulfures.

A titre d'exemple d'oxydes utilisables, on peut citer l'oxyde de vanadium V₂O₅, l'oxyde de nickel NiO₂, l'oxyde de cobalt CoO₂, les oxydes mixtes de cobalt et de nickel, les oxydes de manganèse, l'oxyde de molybdène MoO₃, les oxydes de chrome et les bronzes de vanadium MₓV₂O₅ avec M représentant le fer, le sodium, le potassium, le lithium, l'argent, l'aluminium, le chrome, le baryum, le nickel ou le cobalt.

A titre d'exemples de sulfures utilisables, on peut citer le sulfure de titane TiS₂, le sulfure de molybdène MoS₂ et les sulfures mixtes de nickel et de molybdène.

A titre d'exemples d'oxysulfures utilisables, on peut citer les oxysulfures de molybdène et de titane.

Dans un générateur électrochimique de ce type, utilisant un électrolyte conforme à l'invention, on dispose généralement un séparateur entre les électrodes, et celui-ci peut être constitué par un film microporeux réalisé par exemple en polypropylène ou en polyéthylène.

Le générateur peut être réalisé sous la forme d'un générateur cylindrique comportant un enroulement en spirale des deux électrodes séparées éventuellement par le séparateur. Il peut également être réalisé sous la forme d'un générateur de type prismatique avec des électrodes planes en vis-à-vis et éventuellement un séparateur disposé entre ces électrodes.

D'autres caractéristiques et avantages de l'invention apparaîtront mieux à la lecture de la description qui suit, donnée bien entendu à titre illustratif et non limitatif en référence aux dessins annexés.

### Brève description des dessins

La figure 1 illustre le premier cycle galvanostatique de charge/décharge d'une électrode de graphite dans un électrolyte conforme à l'art antérieur.

La figure 2 représente les premiers cycles galvanostatiques de charge/décharge de la même électrode dans un électrolyte conforme à l'invention.

La figure 3 représente les cycles galvanostatiques de charge/décharge d'une électrode de graphite dans un électrolyte conforme à l'invention.

La figure 4 illustre le comportement au cyclage d'une électrode de graphite dans des électrolytes conformes à l'invention et représente le nombre d'atomes de lithium échangés par cycle en fonction du nombre de cycles effectués.

Les figures 5 et 6 illustrent les cycles de charge/décharge d'une électrode de graphite dans des électrolytes conformes à l'invention, utilisant des sels de lithium différents.

La figure 7 montre l'influence de l'électrolyte sur le nombre d'atomes de lithium échangés en fonction des cycles effectués pour différents sels de lithium utilisés dans l'électrolyte.

La figure 8 illustre les cycles de charge/décharge d'une électrode de graphite conforme au second mode de réalisation de l'invention en utilisant comme électrolyte du carbonate de propylène contenant du perchlorate de lithium.

La figure 9 représente une courbe galvanostatique d'une électrode de titane portée du potentiel de repos vers des potentiels oxydants en présence d'un électrolyte conforme à l'invention.

La figure 10 illustre la stabilité du film formé sur l'électrode de graphite par le procédé de l'invention, en réalisant une oxydation de l'électrode vers 5 volts.

La figure 11 représente les deux premiers cycles de charge/décharge d'une électrode de graphite dans un électrolyte conforme à l'invention.

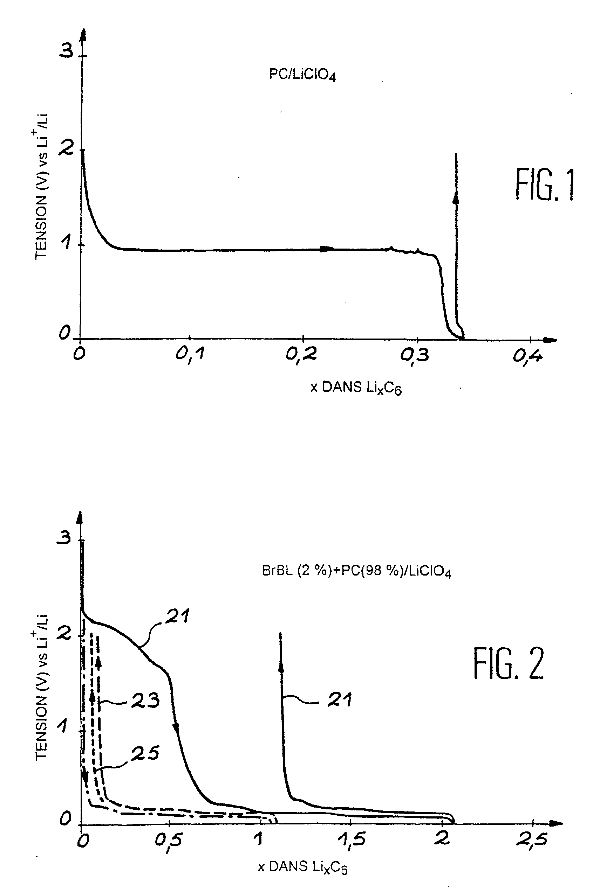

Sur les figures 1 à 3, 5, 6, 8, 10 et 11, on a porté en abscisse le nombre x d'atomes de lithium échangés dans LiₓC₆ et en ordonnée la tension (en volt) par rapport à Li⁺/Li.

### Exposé détaillé des modes de réalisation

Les exemples qui suivent illustrent l'effet de la α-bromo-γ-butyrolactone (BrBL) ou du chloroformiate de méthyle, sur la réversibilité d'une électrode de graphite constituée d'une poudre de graphite de 15 m²/g (commercialisé sous la référence UF₄ par le Carbone Lorraine) et d'un liant constitué de polyfluorure de vinylydène (PVDF), l'électrode comprenant 4 % en poids de PVDF.

Dans les exemples, les électrolytes ont été préparés à partir de carbonate de propylène dégazé sous vide et de sels de lithium LiClO₄, LiBF₄ et LiAsF₆, dégazés respectivement à 150°C, 80°C et 120°C. Lorsque l'additif est BrBL ou le chloroformiate de méthyle (Cl-MF), celui-ci a été dégazé sous vide.

### Exemple 1

Dans cet exemple, on utilise un électrolyte conforme à l'art antérieur constitué par une solution de carbonate de propylène contenant 1 mol/l de perchlorate de lithium.

Dans cet exemple, on teste le comportement de l'électrode de graphite dans une cellule électrochimique à deux électrodes comportant une première électrode en lithium jouant à la fois le rôle de référence et de contre électrode et une seconde électrode de travail qui est l'électrode composite en graphite lié avec le PVDF.

On cycle la cellule entre 2 et 0 V par rapport à Li⁺/Li en mode galvanostatique à l'aide d'un potentiostat/galvanostat sous une densité de courant égale à 20 µA/mg.

La figure 1 montre le premier cycle galvanostatique de charge/décharge de l'électrode composite en graphite dans un électrolyte conforme à l'art antérieur. Sur cette figure, qui représente le nombre x d'atomes de lithium échangés par l'électrode de graphite LiₓC₆ en fonction de la tension par rapport à Li⁺/Li (en volt), on voit que la courbe de réduction présente un long plateau vers 0,9 V attribué à la décomposition du carbonate de propylène dans la structure du graphite.

La réduction du graphite est caractérisée par un phénomène d'exfoliation qui empêche l'intercalation du lithium. On remarque une capacité réversible négligeable et on observe dans la cellule un dégagement gazeux accompagné par la dégradation de l'électrode.

### Exemple 2

Dans cet exemple, on utilise un électrolyte conforme à l'invention, constitué par une solution comprenant 98 % en volume de carbonate de propylène, 2 % en volume de BrBL et 1 mol/l de perchlorate de lithium LiClO₄.

On utilise la même cellule que dans l'exemple 1 et on suit le même mode opératoire mais on réalise cinq cycles de charge/décharge de l'électrode de graphite.

Les résultats obtenus sont représentés sur la figure 2 qui illustre le nombre x d'atomes de lithium intercalés dans l'électrode de graphite LiₓC₆ en fonction de la tension par rapport à Li⁺/Li (en volt). Sur cette figure, les courbes 21, 23 et 25 se réfèrent respectivement aux cycles 1, 3 et 5 de charge/décharge de l'électrode de graphite.

Sur la courbe 21 de cette figure, on observe un épaulement à 2,2 volts qui est attribué à la réduction de l'électrolyte, ce phénomène étant totalement irréversible. Quand l'électrode est polarisée à bas potentiel, les réactions d'intercalation ont lieu. Ceci se traduit dans les courbes électrochimiques par la formation de différents plateaux, trois valeurs de potentiel observées dans la vague de réduction sont associées à trois autres dans la vague d'oxydation. Ces processus Redox observés au-dessous de 0,25 volt correspondent à un phénomène réversible d'intercalation du lithium.

Ces courbes montrent qu'il est possible d'intercaler le lithium de manière réversible dans le graphite en utilisant l'électrolyte conforme à l'invention qui comprend 2 % en volume de BrBL. Ceci s'explique par la réduction de celui-ci à haut potentiel (2,2 volts) qui conduit à la formation d'un film de passivation sur l'électrode. Le film formé est imperméable aux molécules de carbonate de propylène qui de ce fait ne peuvent pas se décomposer au contact du graphite. En revanche, la diffusion des ions lithium est possible à travers ce film, ce qui permet le cyclage réversible de l'électrode, comme on peut l'observer sur les courbes 23 et 25.

### Exemple 3

Dans cet exemple, on suit le même mode opératoire que dans l'exemple 2, mais on utilise comme électrolyte une solution comprenant 95 % en volume de carbonate de propylène et 5 % de BrBL contenant en solution 1 mol/l de perchlorate de lithium LiClO₄.

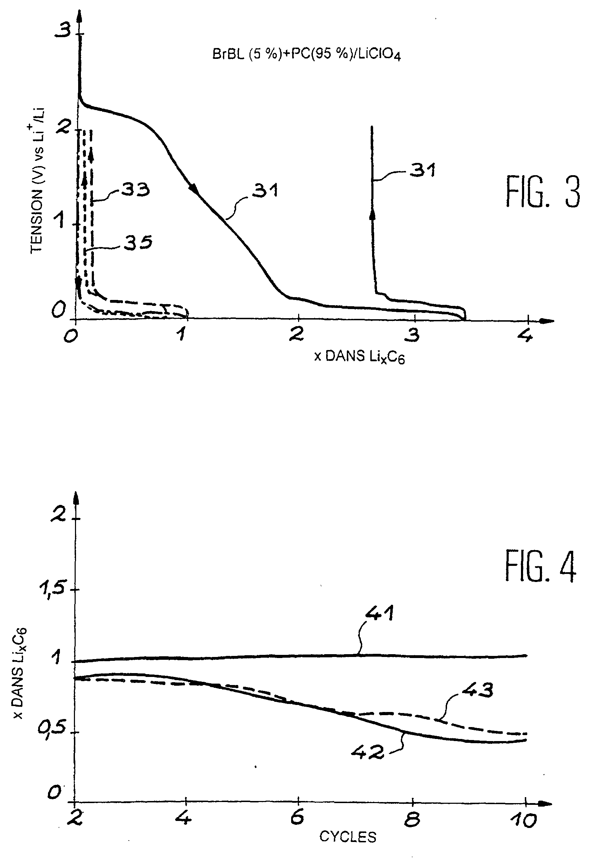

Sur la figure 3, on a reporté les cycles de charge/décharge de l'électrode composite de graphite dans cet électrolyte. Sur cette figure, les courbes 31, 33 et 35 se réfèrent respectivement aux cycles 1, 3 et 5. Dans ce cas, on obtient toujours une réversibilité de l'électrode mais on observe une large capacité irréversible, ceci est sans doute dû au fait que la film de passivation est trop épais et gêne la diffusion des ions lithium dans l'électrode de graphite.

Si l'on effectue la même expérience en utilisant un électrolyte comprenant 10 % en volume de BrBL, on observe également un excès de capacité irréversible.

En revanche, si l'on utilise un électrolyte comprenant 1 % en volume de BrBL, on obtient des résultats identiques à ceux de l'exemple 2 tels que représentés sur la figure 2.

Sur la figure 4, on a représenté l'influence de la teneur en BrBL de l'électrolyte sur le comportement au cyclage de l'électrode composite de graphite. Cette figure illustre le nombre d'atomes de lithium échangés en fonction du nombre de cycles effectués pour un électrolyte à 2 % de BrBL (courbe 41), un électrolyte à 5 % de BrBl (courbe 42) et un électrolyte à 10 % de BrBL (courbe 43).

On remarque ainsi que la capacité reste stable dans l'électrolyte à 2 % de BrBL alors qu'elle baisse au cours des cycles avec les électrolytes contenant 5 et 10 % de BrBL.

### Exemple 4

Dans cet exemple, on teste le comportement d'une électrode composite de graphite identique à celle de l'exemple 1, dans un électrolyte comportant 98 % en volume de carbonate de propylène et 2 % en volume de BrBL, contenant en solution 1 mol/l de tétrafluoborate de lithium LiBF₄. On teste l'électrode de graphite en présence de cet électrolyte dans les mêmes conditions que celles de l'exemple 1.

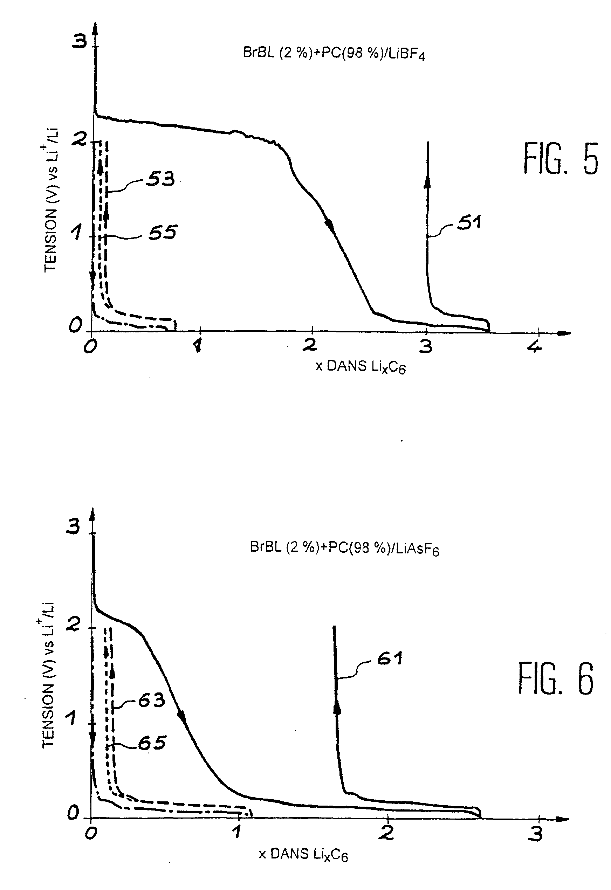

Les résultats obtenus sont donnés sur la figure 5, où les courbes 51, 53 et 55 se réfèrent respectivement aux cycles 1, 3 et 5. On remarque ainsi que l'emploi du tétrafluoroborate de lithium au lieu du perchlorate de lithium conduit à une perte importante lors du premier cycle, un long plateau étant observé vers 2,2 volts. Suite à ces réactions, un faible rendement en cyclage est constaté. On suppose que le film est probablement plus épais et plus résistant que celui développé en présence LiClO₄. On remarque ainsi que la nature du sel de lithium joue également un rôle sur la réversibilité de l'électrode.

### Exemple 5

Dans cet exemple, on suit le même mode opératoire que dans l'exemple 4, mais on utilise comme sel de lithium l'hexafluoroarséniate de lithium LiAsF₆ au lieu de LiBF₄.

Les résultats obtenus sont représentés sur la figure 6 où les courbes 61, 63 et 65 se réfèrent respectivement aux cycles 1, 3 et 5.

On remarque que, dans ce cas, les résultats obtenus sont comparables à ceux que l'on obtient avec l'électrolyte LiClO₄.

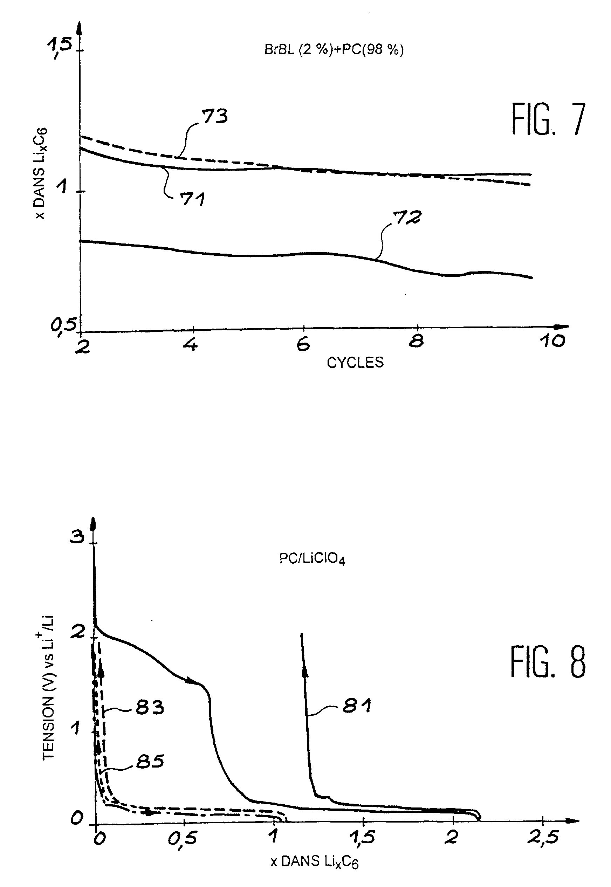

Sur la figure 7, on a rassemblé les résultats obtenus dans les exemples 2, 4 et 5, en représentant l'évolution du nombre x d'atomes de lithium intercalés dans LiₓC₆ en fonction du nombre de cycles effectués. Pour l'électrolyte contenant LiClO₄ (courbe 71), l'électrolyte contenant LiBF₄ (courbe 72) et l'électrolyte comprenant LiAsF₆ (courbe 73).

On remarque ainsi que la cyclabilité est meilleure dans les électrolyte à base de LiClO₄ et LiAsF₆ par rapport à celle contenant LiBF₄. Pour expliquer ce résultat, on peut émettre l'hypothèse que le film de passivation formé en présence LiClO₄ ou de LiAsF₆ est plus poreux et plus adhérent que celui formé en présence de LiBF₄. Si l'on augmente la proportion de BrBL dans ces électrolytes à base de LiBF₄ et LiAsF₆, on obtient le même comportement que celui observé avec LiClO₄, un mauvais rendement en cyclage apparaissant dans tous les électrolytes qui contiennent 5 % en volume ou plus de BrBL.

### Exemple 6

Dans cet exemple, on utilise le second mode de réalisation de l'invention c'est-à-dire que l'on soumet l'électrode de graphite à un traitement préalable d'imprégnation par BrBL.

Dans ce cas, avant utilisation dans le générateur, on immerge l'électrode de graphite dans BrBL liquide. Une durée d'immersion inférieure à 2 minutes suffit pour adsorber dans l'électrode une quantité suffisante de BrBL.

On utilise ensuite cette électrode dans une cellule identique à celle de l'exemple 1 utilisant comme électrolyte une solution de carbonate de propylène contenant 1 mol/l de LiClO₄, et on effectue plusieurs cycles de charge/décharge de l'électrode.

Les résultats obtenus sont représentés sur la figure 8 où les courbes 81, 83 et 85 se réfèrent respectivement aux cycles 1, 3 et 5.

Comme dans le cas de la figure 2, on observe une première rupture de pente à 2,1 volts attribuée à la réduction de BrBL adsorbé, puis la polarisation de l'électrode à bas potentiel s'accompagne par trois transformations réversibles attribuées aux réactions d'intercalation du lithium. Ceci s'explique par le fait que le composé BrBL, couvrant totalement la surface active de l'électrode se réduit à 2,1 volts par formation d'un film de passivation qui précède la décomposition du carbonate de propylène dans la structure du graphite. Les cycles 3 et 5 sont pratiquement identiques à ceux que l'on observe dans le cas de la figure 2.

Le second mode de réalisation de l'invention est donc aussi efficace que le premier mode de réalisation consistant à ajouter BrBL à l'électrolyte.

### Exemple 7

Dans cet exemple, on teste la stabilité à l'oxydation de l'électrolyte de l'invention constitué par 98 % en volume de carbonate de propylène, 2 % en volume de BrBL et 1 mol/l de LiClO₄.

Dans ce but, on utilise une électrode de titane qui est portée directement du potentiel de repos à des potentiels oxydants.

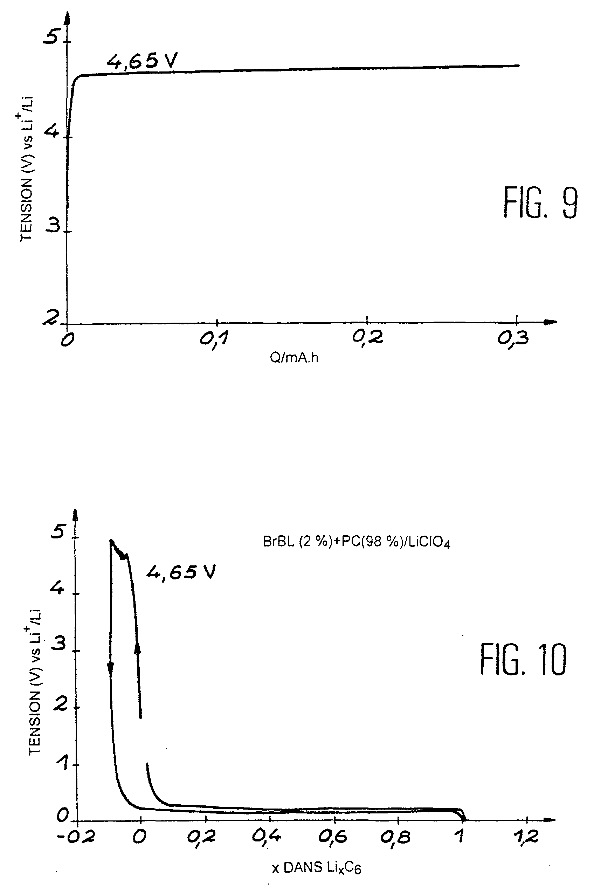

La figure 9 représente la courbe galvanostatique de cette électrode de titane en contact avec l'électrolyte de l'invention. La courbe d'oxydation montre qu'un courant anodique débute au voisinage 4,65 volts. Cette valeur de potentiel est le mur d'oxydation de l'électrolyte.

L'électrolyte est donc stable dans les conditions de fonctionnement des générateurs secondaires à ions lithium.

### Exemple 8

Dans cet exemple, on teste la stabilité à l'oxydation du film de passivation formé sur une électrode de graphite. Dans ce cas, on a réalisé préalablement quelques cycles galvanostatiques entre 2 et 0 volt, en présence de l'électrolyte de l'invention BrBL (2 % v) + PC (98 % v)/LiClO₄. On met ensuite en évidence la stabilité de ce film par oxydation de l'électrode vers 5 volts.

La figure 10 illustre la courbe galvanostatique de cette électrode. On observe ainsi que le potentiel limite est voisin de 4,65 volts. La réduction à 0 volt de l'électrode portée à 5 volts est accompagnée par la formation des stades d'intercalation avec une capacité légèrement supérieure à LiC₆ et la réduction ne s'accompagne pas de la décomposition de l'électrolyte.

Ainsi, la présence de BrBL ne modifie pas le domaine d'électro-activité du milieu carbonate de propylène/LiClO₄. Par ailleurs, la couche superficielle formée sur l'électrode est stable jusqu'à 5 volts.

### Exemple 9

Dans cet exemple, on suit le même mode opératoire que dans l'exemple 2 pour tester l'efficacité du chloroformiate de méthyle (Cl-MF) sur la réversibilité de l'intercalation du lithium dans la même électrode de graphite que celle utilisée dans l'exemple 2.

Dans ce cas, l'électrolyte comprend 1 % en volume de Cl-MF, 99 % en volume de carbonate de propylène et 1 mol/l de LiCLO₄, et on cycle la cellulle entre 2 et 0 volt par rapport à Li⁺/Li sous une densité de courant de 7 mA/g.

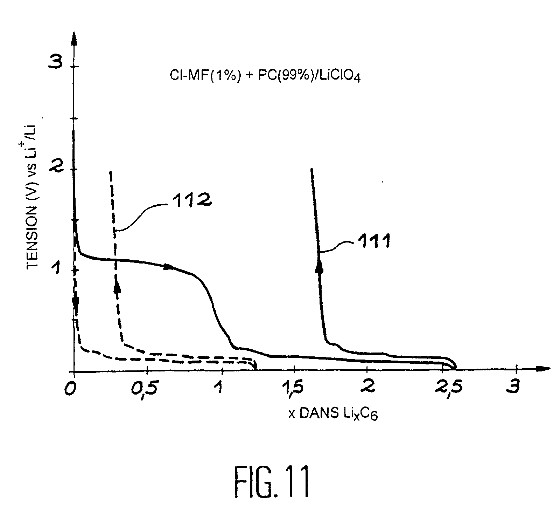

Les résultats obtenus sont représentés sur la figure 11 qui illustre le nombre x d'atomes de Li intercalés dans l'électrode de graphite LiₓC₆ en fonction de la tension par rapport à Li/Li⁺ (en V).

Sur cette figure, les courbes 111 et 112 se réfèrent respectivement aux cycles 1 et 2.

Ces courbes montrent qu'il est possible d'intercaler le lithium de manière réversible dans le graphite lorsqu'on utilise Cl-MF au lieu de BrBL.

### Références citées

[1] : J. electrochem. Soc. , 117, 1970, p. 222-224.
[2] : J. Electroanal. Chem., 219, 1987, p. 273-280.
[3] : J. Chem. Soc., Chem. Commun., 1995, p.1867-1868.
[4] : J. Electrochem. Soc., 143, n°7, Juillet 1996, p. 2230-2235.

## Revendications

1. Procédé pour améliorer la réversibilité de l'intercalation du lithium dans une électrode de carbone d'un générateur électrochimique à ions lithium, utilisant un électrolyte comprenant du carbonate de propylène, selon lequel on forme par voie électrochimique, lors de la première utilisation du générateur, un film de passivation sur la surface de l'électrode de carbone essentiellement à partir d'un composé organique choisi parmi les esters α-halogénés cycliques de formule (II) : 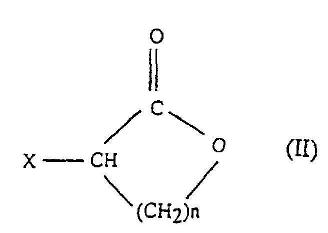 dans laquelle X représente un halogène tel que Cl, Br ou I, et n est un nombre entier allant de 1 à 3, un ou plusieurs des groupes CH₂ pouvant être substitués par des groupements méthyle, éthyle, propyle ou butyle.

2. Procédé selon la revendication 1, dans lequel ledit composé est ajouté à l'électrolyte du générateur électrochimique.

3. Procédé selon la revendication 1, dans lequel ledit composé est préalablement adsorbé sur l'électrode de carbone.

4. Procédé selon l'une quelconque des revendications 1 à 3, dans lequel ledit composé est la α-bromo-γ-butyrolactone.

5. Electrolyte pour générateur électrochimique à ions lithium et à électrode de carbone, comprenant une solution d'au moins un sel de lithium dans un solvant constitué par un mélange comprenant du carbonate de propylène et un composé organique choisi parmi les ester α-halogénés cycliques de formule (II) : 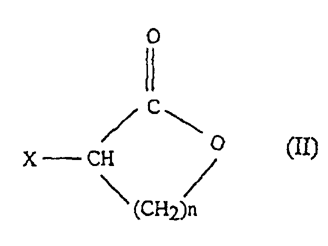 dans laquelle X représente un halogène tel que Cl, Br ou I, et n est un nombre entier allant de 1 à 3, un ou plusieurs des groupes CH₂ pouvant être substitués par des groupements méthyle, éthyle, propyle ou butyle.

6. Electrolyte selon la revendication 5, dans lequel le composé organique est la α-bromo-γ-bytyrolactone.

7. Electrolyte selon l'une quelconque des revendications 5 et 6, dans lequel le sel de lithium est choisi parmi le perchlorate de lithium LiClO₄, l'hexafluoroarséniate de lithium LiAsF₆, l'hexafluorophosphate de lithium et le trifluorométhane sulfonate de lithium.

8. Electrolyte selon la revendication 6, dans lequel le solvant comprend 0,5 à 3 % en volume d'α-bromo-γ-butyrolactone, le reste étant constitué de carbonate de propylène.

9. Electrolyte selon la revendication 8, dans lequel le solvant comprend à 1 à 2 % en volume α-bromo-γ-butyrolactone, le reste étant constitué de carbonate de propylène.

10. Electrolyte selon l'une quelconque des revendications 5 à 9, dans lequel la concentration en sel de lithium est de 0,1 mol/l jusqu'à la saturation.

## Patentansprüche

1. Verfahren zur Verbesserung der Reversibilität des Einbaus des Lithiums in eine Kohlenstoffelektrode eines elektrochemischen Generators mit Lithiumionen, welcher einen Propylencarbonat enthaltenden Elektrolyt verwendet, nach dem man beim ersten Gebrauch des Generators auf der Oberfläche der Kohlenstoffelektrode auf elektrochemischem Wege einen Passivierungsfilm bildet, ausgehend im Wesentlichen von einer unter den cyclischen α-Halogenestem der Formel (II): 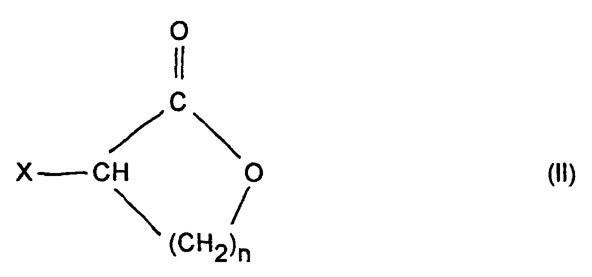 gewählten organischen Verbindung, worin X ein Halogen wie Cl, Br oder I darstellt und n eine ganze Zahl ist, die von 1 bis 3 geht, wobei eine oder mehrere der CH₂-Gruppen durch Methyl-, Ethyl-, Propyl- oder Butylgruppen substituiert sein können.

2. Verfahren nach Anspruch 1, in welchem die genannte Verbindung dem Elektrolyt des elektrochemischen Generators zugesetzt wird.

3. Verfahren nach Anspruch 1, in welchem die genannte Verbindung vorher auf der Kohlenstoffelektrode adsorbiert wird.

4. Verfahren nach einem der Ansprüche 1 bis 3, in welchem die genannte Verbindung das α-Brom-γ-butyrolacton ist.

5. Elektrolyt für einen elektrochemischen Generator mit Lithiumionen und mit Kohlenstoffelektrode, umfassend eine Lösung mindestens eines Lithiumsalzes in einem Lösungsmittel, das aus einer Mischung besteht, die Propylencarbonat und eine organischen Verbindung umfasst, die gewählt ist unter den cyclischen α-Halogenestern der Formel (II): 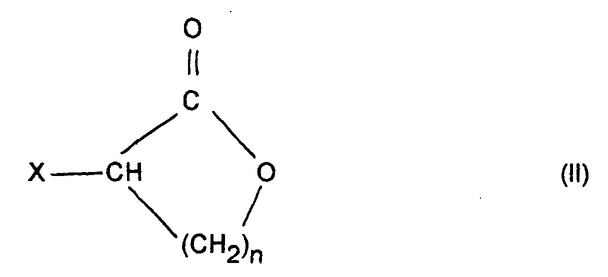 worin X ein Halogen wie Cl, Br oder I darstellt und n eine ganze Zahl ist, die von 1 bis 3 geht, wobei eine oder mehrere der CH₂-Gruppen durch Methyl-, Ethyl-, Propyl- oder Butylgruppen substituiert sein können.

6. Elektrolyt nach Anspruch 5, in welchem die organische Verbindung das α-Brom-γ-butyrolacton ist.

7. Elektrolyt nach einem der Ansprüche 5 und 6, in welchem das Lithiumsalz gewählt ist unter Lithiumperchlorat LiClO₄, Lithiumhexafluoroarsenat LiAsF₆, Lithiumhexafluorophosphat und Lithiumtrifluormethansulfonat.

8. Elektrolyt nach Anspruch 6, in welchem das Lösungsmittel 0,5 bis 3 Vol.-% α-Brom-γ-butyrolacton enthält, wobei der Rest aus Propylencarbonat besteht.

9. Elektrolyt nach Anspruch 8, in welchem das Lösungsmittel 1 bis 2 Vol.-% α-Brom-γ-butyrolacton enthält, wobei der Rest aus Propylencarbonat besteht.

10. Elektrolyt nach einem der Ansprüche 5 bis 9, in welchem die Konzentration des Lithiumsalzes zwischen 0,1 mol/l und Sättigung liegt.

## Claims

1. Process to improve the reversibility of the insertion of lithium in a carbon electrode of a lithium ion electrochemical generator, using an electrolyte comprising propylene carbonate, wherein a passivation film is formed electrochemically, during the first use of the generator, on the surface of the carbon electrode essentially from an organic compound selected from cyclic α-halogenated esters of formula (II): 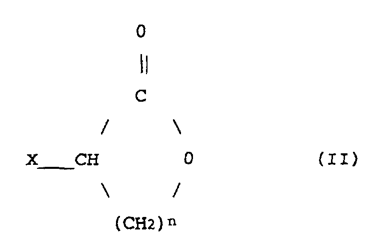 wherein X represents a halogen such as Cl, Br or I, and n is a whole number ranging from 1 to 3, it being possible to replace one or more of the CH₂ groups by methyl, ethyl, propyl or butyl groups.

2. Process according to claim 1, wherein said compound is added to the electrolyte of the electrochemical generator.

3. Process according to claim 1, wherein said compound is previously adsorbed on the carbon electrode.

4. Process according to any of claims 1 to 3, wherein said compound is α-bromo-γ-butyrolactone.

5. Electrolyte for lithium ion and carbon electrode electrochemical generator, comprising a solution of at least one lithium salt in a solvent composed of a mixture comprising propylene carbonate and an organic compound selected from cyclic α-halogenated esters with the formula (II): 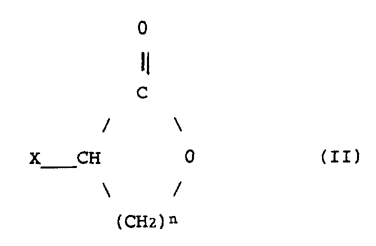 wherein X represents a halogen such as Cl, Br or I, and n is a whole number ranging from 1 to 3, it being possible to replace one or more of the CH₂ groups by methyl, ethyl, propyl or butyl groups.

6. Electrolyte according to claim 5, wherein the organic compound is α-bromo-γ-butyrolactone.

7. Electrolyte according to any one of claims 5 and 6, wherein the lithium salt is selected from lithium perchlorate LiClO₄, lithium hexafluoroarseniate LiAsF₆, lithium hexafluorophosphate and lithium trifluoromethane sulfonate.

8. Electrolyte according to claim 6, wherein the solvent comprises 0.5 to 3% by volume α-bromo-γ-butyrolactone, the remainder being composed of propylene carbonate.

9. Electrolyte according to claim 8, wherein the solvent comprises 1 to 2% by volume α-bromo-γ-butyrolactone, the remainder being composed of propylene carbonate.

10. Electrolyte according to any one of claims 5 to 9, wherein the lithium salt concentration is from 0.1 mol/l to saturation.
